# EUROPÄISCHE PATENTANMELDUNG

(11) **EP 0 554 535 A1**
(43) Veröffentlichungstag der Anmeldung: **11.08.1993**
(21) Anmeldenummer: 92120265.1
(22) Anmeldetag: 27.11.1992
(51) Int. Cl.: H01M 2/12

(54) **Verschlussstopfen für elektrische Akkumulatoren**

(30) Priorität: 06.02.1992 DE 4203332
(71) Anmelder: VARTA Batterie Aktiengesellschaft, D-30405 Hannover (DE)
(72) Erfinder: Krichbaum, Jürgen, W-6093 Flörsheim (DE); Kraft, Helmut, W-6237 Liederbach (DE)
(74) Vertreter: Kaiser, Dieter Ralf, Dipl.-Ing.

(57) **Zusammenfassung**

Ein Verschlußstopfen (1) vereinigt in seinem Gehäuse (2) mit Abschlußkappe (9) eine Flammsperre (11) mit einer Ventilanordnung, bestehend aus einem Dichtungsträger (3) mit Gasaustrittsöffnungen (4) und einer Dichtungsscheibe (5), die den Dichtsitz einer tubusförmigen, mit Dichtlippe (8) versehenen Öffnung (7) der Ventilmembran (6) bildet, wobei der Tubus unter der durch Faltungen (10) variierbaren Eigenspannung der Membran auf der Dichtungsscheibe (5) aufsitzt. Der auf den verhältnismäßig kleinen Öffnungsquerschnitt des Tubus konzentrierten Membranspannung wirkt die großflächige Druckbeaufschlagung der Batteriegase entgegen, so daß das Ventil bereits bei sehr geringen Überdrucken öffnet.

## Beschreibung

Die Erfindung betrifft einen Verschlußstopfen für elektrische Akkumulatoren, insbesondere mit festgelegtem Elektrolyten, der einen Entlüftungsdurchgang mit einer Verschlußöffnung und einem Ventilsitz aufweist und der eine Ventilmembran besitzt.

Die Verwendung von Membranventilen bei Batterieverschlüssen an Akkumulatoren der abgedichteten Bauart ist bekannt. In ihrer großen Mehrheit handelt es sich um Einwegventile, von denen verlangt wird, daß sie bei einem bestimmten Überdruck zuverlässig nach außen öffnen. Das Entgasungsventil bzw. die Ventilmembran, welche die Austrittsöffnung für die Akkumulatorgase versperrt, ist zu diesem Zweck häufig durch eine Belastungsfeder vorgespannt. Beispiele lassen sich den deutschen Gebrauchsmustern 76 20 138 oder 91 04 291 entnehmen. Derartige Federn bedeuten jedoch einen nicht unerheblichen Fertigungsaufwand und sind außerdem korrosionsgefährdet. Es wurden daher auch bereits selbstdichtende Ventilkörper aus einem elastischen Material vorgeschlagen.

So ist aus der DE-PS 851 370 ein Entgasungsstopfen bekannt, bei dem durch eine Mittelöffnung des Stopfengehäuses ein Ventil aus elastischem Kunststoff hindurchgeführt ist, wobei die Öffnung mit einem verbreiterten Plattenteil des Ventilkörpers rückschlagventilartig verschlossen wird. Die nachgiebigen Eigenschaften und die Schließeigenschaften sind demnach in demselben Teil des Formkörpers vereinigt.

Gemäß der DE-OS 2 131 323 oder der DE-AS 1 119 351 ist jeweils eine unter Eigenspannung stehende elastische Membran vorgesehen, die gegen einen Dichtungssitz gepreßt wird.

Der Erfindung liegt die Aufgabe zugrunde, einen Verschlußstopfen mit Membranventil für Batteriezellen verschlossener elektrochemischer Systeme anzugeben, der einerseits bekannten Konstruktionen durch einfache und gegen Störungen unanfällige Bauweise zumindest ebenbürtig ist darüber hinaus auch schon bei sehr geringen Überdrucken anspricht.

Die Aufgabe wird erfindungsgemäß durch einen Verschlußstopfen gelöst, wie er im Patentanspruch 1 definiert ist. Beim erfindungsgemäßen Verschlußstopfen wird der Entlüftungsdurchgang einerseits von Gasaustrittsöffnungen gebildet, welche den Ventilsitz umgeben, andererseits durch eine zentrale Öffnung in der Ventilmembran, die normalerweise verschlossen ist, da an sie eine kreisförmige umlaufende Dichtlippe angeformt ist, die unter der Vorspannkraft der Membran an einen Ventil- bzw. Dichtsitz angedrückt wird. Bei innerem Überdruck hebt die Membran bzw. die Dichtlippe von dem Dichtsitz ab und gibt die zentrale Öffnung in der Membran zur Entgasung frei.

Der besondere Vorteil der Erfindung liegt darin, daß im Gegensatz zu bekannten Membranventilen der Querschnitt der Verschlußöffnung im Vergleich zu der vom Gasdruck beaufschlagten Membranfläche sehr klein ist. Dadurch können äußert geringe Ansprechdrucke mit genauen Drucktoleranzen, die nur wenige mbar betragen, eingestellt werden. Dabei bestimmt die Vorspannkraft der Ventilmembran den Öffnungdruck über der den Batteriegasen voll ausgesetzten Membranfläche.

Die Erfindung wird im folgenden am Beispiel zweier bevorzugter Ausführungsformen näher erläutert.

Figur 1 zeigt einen Verschlußstopfen mit Membranventil gemäß der Erfindung im Schnitt.

Figur 2 zeigt eine weitere Ausführungsform des erfindungsgemäßen Verschlußstopfens.

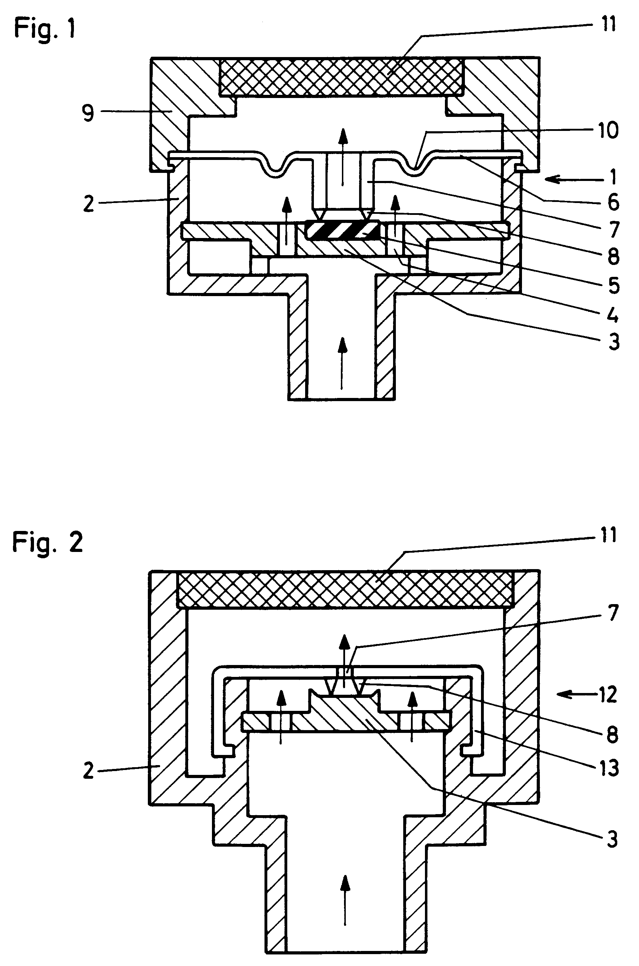

Nach Figur 1 ist in dem Gehäuse 2 des Verschlußstopfens 1 ein Dichtungsträger 3 mit Gasaustrittsöffnungen in Gestalt von Bohrungen 4 fest eingebaut. Er trägt in seiner Mitte eine Dichtungsscheibe 5 als eigentlichen Ventil- bzw. Dichtsitz. Sie wird von einer Einlage aus einem Dichtungsmaterial, z.B. Gummi, gebildet.

Die zentrale Öffnung der Ventilmembran 6 bildet bei dieser Stopfenausführung ein Tubus 7 mit an seinem unteren Rand angeformter Dichtlippe 8, die auf der Dichtungsscheibe 5 aufsitzt.

Die scheibenförmige Ventilmembran ist mit ihrem Umfangrand in der zylindrischen Seitenwand des Stopfengehäuses durch Kleben, Schweißen oder -wie hier gezeigtdurch Klemmen zwischen dem Gehäuse 2 und einer Abschlußkappe 9 so befestigt, daß eine zuverlässige Abdichtung gegen die Gehäusewand gewährleistet ist.

Die Ventilmembran besteht aus säurebeständigem Kunststoff, Gummi oder einem kunststoffbeschichteten Metall. Vorzugsweise bilden Ventilmembran und Tubus ein einstückiges Teil, an welches die Dichtlippe aus einem weicheren Kunststoff oder Gummi angespritzt ist.

Aufgrund den der Ventilmembran innewohnenden Eigenspannung wird auf die Dichtungsscheibe ein gewisser Schließungsdruck ausgeübt, so daß unter normalen Betriebsbedingungen den Batteriegasen der Austritt durch den Tubus 7 verwehrt ist. Dabei greift der Gasdruck über der gesamten Querschnittfläche der Ventilmembran an, während die Gegenspannung der Ventilmembran dieser Kraft nur auf einem sehr kleinen Raum, nämlich auf der von der kreisförmigen Dichtlippe auf der Dichtungsscheibe umgrenzten Fläche, die Waage hält. Die Ventilöffnung wird dadurch bereits bei sehr geringen Innendrucken erzwungen.

Erfindungsgemäß läßt sich der Ansprechdruck, bei dem der Tubus von der Dichtfläche abhebt und den Gasweg (Pfeile) freigibt, noch durch die Einbringung von zentrisch umlaufenden Faltungen 10 in die Ventilmembran differenzieren, wobei je nach deren Anzahl (in der Figur ist nur eine Falte dargestellt) die Eigenspannung der Membran und damit die Vorspannkraft in der gewünschten Weise mehr oder weniger gebrochen wird.

Ein weiterer Vorteil des Verschlußstopfens gemäß der Erfindung liegt schließlich in der Kombination des Membranventils mit einer Flammsperre 11 als Schutz der explosiblen Batteriegase gegen einen Zünddurchschlag von außen. Die Flammsperre ist als eine Glas- oder Keramikfritte vorteilhaft in die Abschlußkappe 9 integriert, die mittels Schnappverschluß leicht auf das Stopfengehäuse 2 aufgesteckt werden kann. Gegebenenfalls kann der Fritte noch eine zusätzliche Löschkammer nachgeschaltet werden.

Der Ausgestaltung des erindungsgemäßen Verschlußstopfens nach Figur 2 liegt der gleiche Ventilmechanismus wie bereits beschrieben zugrunde. Der besseren Übersicht halber sind alle Teile des hier dargestellten Verschlußstopfens 12, soweit sie denen des Verschlußstopfens 1 entsprechen, mit den gleichen Bezugszeichen versehen.

Die konstruktive Abweichung besteht im wesentlichen darin, daß die Ventilmembran hier Teil einer Kappe 13 ist, die über eine innere Hülse des Gehäuses gestülpt ist und aus einem Elastomer besteht. Auch sie besitzt eine zentrale Öffnung 7 mit angeformter Dichtlippe 8, welche die Membran gegen die am Dichtungsträger angeordnete Dichtfläche abdichtet. Eine Befettung derselben kann die Dichtwirkung unterstützen. Im Rahmen der Erfindung liegt auch eine Ausgestaltung des Dichtungssitzes ähnlich wie bei dem Stopfen der Figur 1, z.B. durch Anordnung einer gummielastischen Scheibe.

Im normalen Betriebszustand der Batteriezelle übt die Kappe aufgrund ihrer eigenen Vorspannung über die Dichtlippe einen vorwählbaren Druck auf die Dichtfläche aus, wodurch die Verbindung vom Zellinnenraum zur Außenatmosphäre unterbrochen ist. Bei erhöhtem Innendruck wirkt das Gas auch in diesem Fall auf eine ausgedehnte Membranfläche, die sich bei Überschreiten des vorgewählten Gegendrucks nach außen wölbt, so daß sich die Dichtlippe 8 von der Dichtfläche abhebt und den Gasweg über das zentrale Loch in der Mitte der Dichtlippe freigibt.

## Patentansprüche

1. Verschlußstopfen für elektrische Akkumulatoren, insbesondere mit festgelegtem Elektrolyten, der einen Entlüftungsdurchgang mit einer Verschlußöffnung und einem Ventilsitz aufweist und der eine Ventilmembran besitzt, dadurch gekennzeichnet, daß der Ventilsitz von Gasaustrittsöffnungen (4) umgeben ist und daß die Ventilmembran (6) eine zentrale Öffnung (7) aufweist, die mit einer Dichtlippe (8) versehen ist, welche auf dem Ventilsitz ruht, so daß bei innerem Überdruck die Ventilmembran (6) entgegen ihrer eigenen Vorspannkraft von dem Ventilsitz abhebt und der Gasüberschuß durch die zentrale Öffnung (7) entweicht.

2. Verschlußstopfen nach Anspruch 1, dadurch gekennzeichnet, daß die Dichtlippe (8) am unteren Rand eines die Öffnung (7) bildenden Tubus angeordnet ist, daß der Ventilsitz aus einer im Zentrum eines Dichtungsträgers (3) angeordneten Dichtungsscheibe (5) besteht und daß der Dichtungsträger Bohrungen (4) besitzt, welche die Gasaustrittsöffnungen bilden.

3. Verschlußstopfen nach Anspruch 2, dadurch gekennzeichnet, daß die Ventilmembran (6) scheibenförmig ist und mit ihrem Umfangsrand in der Seitenwand des Verschlußstopfengehäuses eingespannt ist.

4. Verschlußstopfen nach Anspruch 3, dadurch gekennzeichnet, daß die Ventilmembran (6) eine oder mehrere konzentrisch umlaufende Falten (10) besitzt.

5. Verschlußstopfen nach Anspruch 1, dadurch gekennzeichnet, daß die Ventilmembran (6) Teil einer Kappe (13) ist, die über eine innere Hülse des Stopfengehäuses gestülpt ist.

6. Verschlußstopfen nach einem der Ansprüche 1 bis 5, dadurch gekennzeichnet, daß in den Deckel des Stopfengehäuses eine Flammsperre (11) integriert ist.

7. Verschlußstopfen nach einem der Ansprüche 1 bis 4, dadurch gekennzeichnet, daß die Ventilmembran (6) und Kappe (13) aus Kunststoff oder Gummi bestehen.
